# EUROPÄISCHE PATENTANMELDUNG

(11) **EP 4 385 892 A1**
(43) Veröffentlichungstag der Anmeldung: **19.06.2024**
(21) Anmeldenummer: 22213617.8
(22) Anmeldetag: 14.12.2022
(51) Int. Cl.: B64D 9/00, A62C 3/08

(54) **FLUGZEUG MIT FRACHTRAUM**

(71) Anmelder: Airbus Operations GmbH, 21129 Hamburg (DE)
(72) Erfinder: Christensen, Kai, 21129 Hamburg (DE); Kallergis, Konstantin, 21129 Hamburg (DE)

(57) **Zusammenfassung**

Dargestellt und beschrieben ist ein Flugzeug 1 mit einem Frachtraum, der Frachtraum 3 umfasst eine Verkleidung 13 jeweils mit einem Durchbrandschutz, dadurch gekennzeichnet, dass der Frachtraum 3 ferner eine modulare Feuerbarriere 9 aus einer Vielzahl an Feuerbarriere-Elementen 11a, 11b, 11c, ..., 11i umfasst, die ein Material aufweisen, das einen zusätzlichen Durchbrandschutz bietet zum Material der Verkleidung 13 des Frachtraums 3. Grundsätzliches Ziel der vorliegenden Anmeldung ist es, eine zusätzlichen Feuerbarriere für einen Frachtraum bereitzustellen, so dass ein Feuer länger in dem Frachtraum ohne Durchbrand gehalten werden kann, so dass dem Piloten mehr Zeit für eine Notlandung zur Verfügung steht.

## Beschreibung

Die vorliegende Anmeldung betrifft ein Flugzeug mit einem Frachtraum, der Frachtraum umfasst eine Verkleidung mit einem Durchbrandschutz.

Solche Frachträume sind bekannt und unterliegen gesetzlichen Sicherheitsrichtlinien. Insbesondere bestimmen die Federal Aviation Regulation (FAR) Vorschriften, innerhalb welcher Zeit bei einer bestimmten Temperatur kein Flammendurchschlag ("flame penetration") passieren darf, vgl. FAR 25.857: Bei der Verwendung eines 2-Gallonen-pro-Stunde Kerosinbrenners müssen die Proben 5 Minuten beflammbar sein. Ferner müssen die Proben dem Durchbrand wiederstehen und die Maximaltemperatur (gemessen im Abstand von 4 inches (~10,16 cm) über der horizontal angeordneten Probe) darf 400° Fahrenheit (~200°C) nicht überschreiten.

Bei einem Transport von Batterien kann es durch Thermisches Durchgehen (engl. "thermal runaway") jedoch zu einem sich selbst verstärkenden wärmeproduzierenden Prozess kommen, der Temperaturen über 660°C hervorruft.

Die Firma AmSafe Bridport bietet Abdeckungen zur Eindämmung von Bränden, insbesondere von Lithium-Ionen-Batterienbränden, an. Erfahrungsgemäß sind diese Schutzhüllen (die sogenannten "containment cover") jedoch umständlich in der Handhabung, da sie vor der Beladung des Frachtcontainers um diesen herum angeordnet werden müssen.

Es ist also wünschenswert und Aufgabe der vorliegenden Anmeldung, ein Flugzeug mit einem Frachtraum bereitzustellen, der einen erhöhten Schutz für Batterietransporte bietet und gleichzeitig eine einfache Handhabung erlaubt.

Zur Lösung dieser Aufgabe dient das Flugzeug nach Anspruch 1 Vorteilhafte Ausführungsformen sind Gegenstand der Unteransprüche.

Grundsätzliches Ziel der vorliegenden Anmeldung ist es, eine zusätzlichen Feuerbarriere für einen Frachtraum bereitzustellen, so dass ein Feuer länger in dem Frachtraum ohne Durchbrand gehalten werden kann, so dass dem Piloten mehr Zeit für eine Notlandung zur Verfügung steht.

Das erfindungsgemäße Flugzeug hat einen Frachtraum, wobei der Frachtraum eine Verkleidung jeweils mit einem Durchbrandschutz umfasst, und wobei der Frachtraum ferner eine modulare Feuerbarriere aus einer Vielzahl an Feuerbarriere-Elementen umfasst, die ein Material aufweisen, das einen zusätzlichen Durchbrandschutz bietet zum Material der Verkleidung des Frachtraums.

Die erfindungsgemäße modulare Feuerbarriere ist zwischen einem Aufbewahrungszustand und einem Nutzungszustand bewegbar. Auf diese Weise kann die Fracht wie üblich mit Hilfe der Rollenbahn(en) und Power Drive Units (PDUs) oder per Hand in den Frachtraum auf die gewünschte Position gebracht werden, ohne dass die modulare Feuerbarriere im Weg ist, und dann anschließend von der modularen Feuerbarriere umhüllt werden, wenn diese in den Nutzungszustand gebracht wird.

Der Aufbewahrungszustand der modularen Feuerbarriere bzw. der Feuerbarriere-Elemente umfasst in einer erfindungsgemäßen Ausführungsform eine integrale Aufbewahrung im Frachtraum. Diese kann beispielsweise wie ein Rollo oder ein Roll-Up/Roll Down ausgestaltet sein, so dass die modulare Feuerbarriere auf einfache Weise (z.B. durch Heraus-, Hoch- oder Herunterziehen und - wenn gewünscht - anschließendem Befestigen an der Decke, Fußboden bzw. Seitenwand) aus dem Aufbewahrungszustand in den Nutzungszustand gebracht werden kann. Es ist beispielsweise möglich, dass die Feuerbarriere-Elemente einfach aufgerollt an der Decke des Frachtbodens aufbewahrt werden und wie eine Gardine herabgelassen werden. Integral bedeutet vorliegend, dass die modulare Feuerbarriere sich dauerhaft im Frachtraum befindet und dabei die Be- und Entladung im Aufbewahrungszustand nicht behindert.

Bevorzugt sind die Feuerbarriere-Elemente an der Verkleidung (dem sogenannten "Lining") des Frachtraums mittels Schnellbefestigungsmitteln befestigbar, derart dass ein oder mehrere Bereiche des Frachtraums den zusätzlichen Durchbrandschutz haben. Auf diese Weise können diverse Frachtstellplätze unterschiedlicher Größe mit dem verbesserten Durchbrandschutz ausgestattet werden. Die Schnellverschlüsse ermöglichen eine schnelle und einfache Installation der Feuerbarriere-Elemente. Geeignete Schnellbefestigungsmittel sind beispielsweise Klettverschlüsse und/oder Reißverschlüsse, aber natürlich sind auch andere mechanische einfache Befestigungsmöglichen wie z.B. Haken/Ösen oder ähnliches denkbar.

Die Verkleidung umfasst Seitenelemente und/oder Deckenelemente und/oder Fußbodenelemente des Frachtraums. Hierdurch kann die modulare Feuerbarriere an allen Bereichen des Frachtraum flexibel errichtet werden.

Vorzugsweise ist der Frachtraum an wenigstens einer bestimmten Position zur Befestigung von Unit Load Devices (ULDs, wie z.B. Paletten oder Container) geeignet, und der eine oder die mehreren Bereiche mit dem zusätzlichen Durchbrandschutz ein oder mehrere gewünschte Volumen um die wenigstens eine bestimmte Position zur Befestigung von ULDs umfasst. Hierdurch kann an mehreren Frachtraumpositionen gezielt ein Feuerschutz für spezielle ULDs mit Batterien erzeugt werden.

In einer speziellen Ausgestaltung der vorliegenden Anmeldung kann beispielsweise ein Feuerbarriere-Element auch als einzelner Materialstreifen auf einem der Fußbodenpanele ("floor panels") des Frachtraums angeordnet sein (zwischen den zur Cargobefestigung dienenden Sitzschienen, so dass diese weiterhin normal zur Frachtverzurrung mittels Riegeln ("Latches") oder Spanngurten ("tie down straps") zur Verfügung stehen). Nach einer Beladung des Flugzeugfrachtraums mit z.B. einem Container befindet sich dieser in seiner verzurrten Reiseposition also direkt über dem Feuerbarriere-Element-Materialstreifen. Dieser wird dann mit den beispielsweise von der Decke hängenden Feuerbarriere-Elementen mit Schnellbefestigungsmitteln verbunden, so dass ein abgeschlossenes Volumen mit erhöhtem Durchbrandschutz entsteht.

Im erfindungsgemäßen Flugzeug ist es möglich, dass der Frachtraum im Unterdeck und/oder auf dem Hauptdeck des Flugzeugs angeordnet ist. Das Flugzeug kann ein Passagierflugzeug oder ein reines Frachtflugzeug (auch mit mehreren Frachtdecks) sein.

Die erfindungsgemäßen Feuerbarriere-Elemente enthalten vorzugsweise Aramide, da diese hochfeste und hochtemperaturbeständige Fasern umfassen, die einen bewährten Schutz gegen Feuer bieten.

Erfindungsgemäß kann die modulare Feuerbarriere aus einer Vielzahl an Feuerbarriere-Elementen ferner wenigstens einen Temperatursensor und/oder einen Rauchsensor umfassen. Es sind selbstverständlich auch andere Arten von Sensoren zusätzlich oder alternativ denkbar, solange ihre Sensorik einen Hinweis auf einen thermal runaway liefern kann. Hierfür kommen beispielsweise Wasserstoff (H2), Kohlenstoffmonoxid (CO), Kohlenstoffdioxid (CO2), Ethylen (C2H4) oder Methan (CH4) in Frage. Dieser wenigstens eine Sensor ist kommunikativ mit einem Flugzeug-Managementsystem gekoppelt, so dass es dem Piloten den Status der transportierten Fracht in dem wenigstens einen speziell abgetrennten Bereich mitteilt. Hierdurch kann der Pilot besonders schnell auf einen Brand im Cargobereich reagieren.

Die Erfindung wird im Folgenden unter Bezugnahme auf die Zeichnungen erläutert.
Figur 1 zeigt beispielhaft eine Außenansicht eines erfindungsgemäßen Flugzeug.
Figur 2 zeigt einen Frachtraum eines Flugzeugs mit einer modularen Feuerbarriere.
Figur 3 zeigt einen Frachtraum eines Flugzeugs mit einer modularen Feuerbarriere um einen Container.

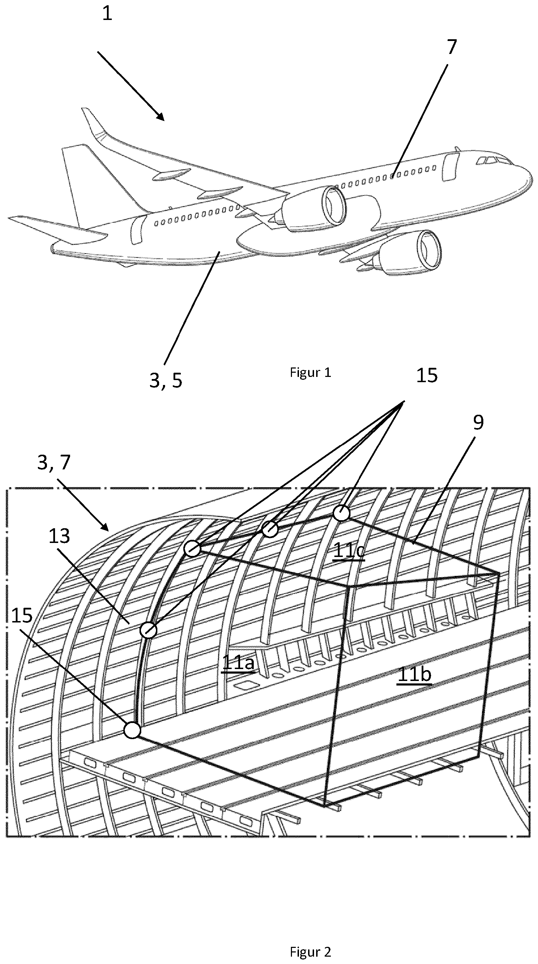

Figur 1 ist die Außenansicht eines erfindungsgemäßen Flugzeug 1. Der Frachtraum 3 kann sowohl im Unterdeck 5 und/oder auf dem Hauptdeck 7 des Flugzeugs 1 angeordnet sein. Abgebildet ist ein Passagierflugzeug (A320) mit einem Passagierbereich inklusive Fenster auf dem Hauptdeck 7, so dass der Frachtraum 3 im Unterdeck 5 angeordnet ist.

Der in Figur 2 dargestellte Frachtraum 3 befindet sich auf dem Hauptdeck 7 des Flugzeugs 1. Gezeigt wird ein Frachtraum 3 eines erfindungsgemäßen Flugzeugs 1 mit einer schematisch dargestellten modularen Feuerbarriere 9 aus einer Vielzahl an Feuerbarriere-Elementen 11a, 11 b, 11c, wobei hier nur zwei Seitenelemente und die obere Abdeckung dargestellt sind . Hierdurch hat der von den Feuerbarriere-Elementen 11a, 11 b, 11c,..., 11i umschlossene Raum einen zusätzlichen Durchbrandschutz zu dem restlichen Frachtraum 3. Die Feuerbarriere-Elemente 11a, 11 b, 11c,..., 11i umfassen vorzugsweise Aramide, da diese einen bewährten Schutz gegen Feuer bieten.

Die Feuerbarriere-Elemente 11a, 11 b, 11c,..., 11i können an der Verkleidung 13 des Frachtraums 3 mittels Schnellbefestigungsmitteln befestigt werden, wie beispielsweise Klettverschlüssen und/oder Reißverschlüssen. Wie in Figur 2 zu sehen, kann "befestigt sein" für ein Feuerbarriere-Element bedeuten, dass nur eine oder mehrere Seitenkanten eines Feuerbarriere-Elements an der Verkleidung (dem "Lining") befestigt sind. Dies kann beispielsweise durch punktförmige Befestigungspunkte 15 erfolgen, aber natürlich können diese auch eine andere Form, wie z.B. Streifen haben. Andere Feuerbarriere-Elemente derselben modularen Feuerbarriere können dann beispielsweise an der Decke befestigt sein (nicht dargestellt), so dass individuell benötigte Schutz-Volumen kreiert werden können.

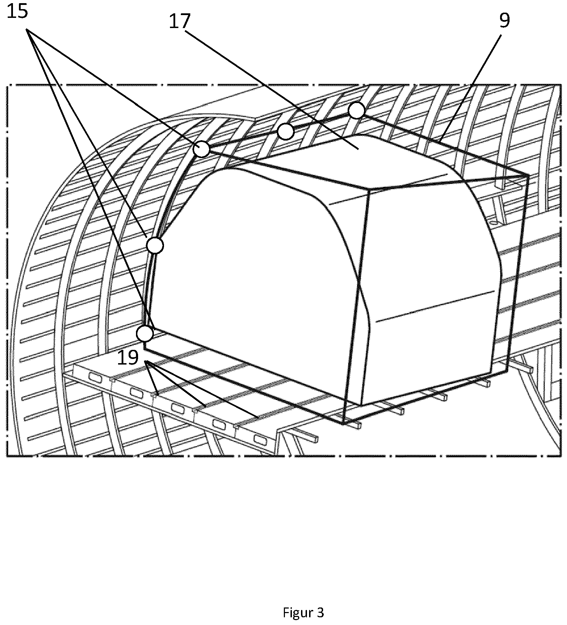

Figur 3 zeigt die modulare Feuerbarriere 9 aus Figur 2, die zumindest teilweise einen Container 17 umgibt. Dies soll beispielhaft zeigen, dass das erfindungsgemäße Flugzeug 1 mit dem Frachtraum 3 an wenigstens einer bestimmten Position zur Befestigung von Unit Load Devices (ULDs) (wie z.B. den dargestellten Container 17) geeignet ist. Hierbei kann dieser Bereich ein gewünschtes Volumen um die wenigstens eine bestimmte Position zur Befestigung von ULDs umfassen. Zur Befestigung des Containers 17 können dann frachtraumübliche Verzurrgurte oder Riegel verwendet werden, die in den dargestellten Sitzschienenprofilen 19 angeordnet sind.

### Bezugszeichen

- 1: Flugzeug
- 3: Frachtraum
- 5: Unterdeck
- 7: Hauptdeck
- 9: modulare Feuerbarriere
- 11a, 11b, 11c, ..., 11i: Feuerbarriere-Elemente
- 13: Verkleidung
- 15: Schnellbefestigungsmittel/ punktförmige Befestigungspunkte
- 17: Container bzw. Unit Load Device (ULD)
- 19: Sitzschienenprofil

## Patentansprüche

1. Flugzeug (1) mit einem Frachtraum, der Frachtraum (3) umfasst eine Verkleidung (13) jeweils mit einem Durchbrandschutz, **dadurch gekennzeichnet, dass** der Frachtraum (3) ferner eine modulare Feuerbarriere (9) aus einer Vielzahl an Feuerbarriere-Elementen (11a, 11b, 11c, ..., 11i) umfasst, die ein Material aufweisen, das einen zusätzlichen Durchbrandschutz bietet zum Material der Verkleidung (13) des Frachtraums (3).

2. Flugzeug (1) nach Anspruch 1, wobei die modulare Feuerbarriere (9) zwischen einem Aufbewahrungszustand und einem Nutzungszustand bewegbar ist.

3. Flugzeug (1) nach einem der vorherigen Ansprüche, wobei der Aufbewahrungszustand eine integrale Aufbewahrung im Frachtraum (3) umfasst.

4. Flugzeug (1) nach einem der vorherigen Ansprüche, wobei die Feuerbarriere-Elemente (11a, 11b, 11c, ..., 11i) an der Verkleidung (13) des Frachtraums (3) mittels Schnellbefestigungsmitteln (15) befestigbar sind, derart dass ein oder mehrere Bereiche des Frachtraums (3) den zusätzlichen Durchbrandschutz haben.

5. Flugzeug (1) nach einem der vorherigen Ansprüche, wobei die Verkleidung (13) Seitenelemente und/oder Deckenelemente und/oder Fußbodenelemente des Frachtraums (3) umfasst.

6. Flugzeug (1) nach einem der vorherigen Ansprüche, wobei der Frachtraum (3) an wenigstens einer bestimmten Position zur Befestigung von Unit Load Devices (ULDs) (17) geeignet ist und wobei der eine oder die mehreren Bereiche ein oder mehrere gewünschte Volumen um die wenigstens eine bestimmte Position zur Befestigung von ULDs (17) umfasst.

7. Flugzeug (1) nach einem der vorherigen Ansprüche, wobei der Frachtraum (3) im Unterdeck (5) und/oder auf dem Hauptdeck (7) des Flugzeugs (1) angeordnet ist.

8. Flugzeug (1) nach einem der vorherigen Ansprüche, wobei die Schnellbefestigungsmittel (15) Klettverschlüsse und/oder Reißverschlüsse umfassen.

9. Flugzeug nach einem der vorherigen Ansprüche, wobei die Feuerbarriere-Elemente (11a, 11b, 11c, ..., 11i) Aramide umfassen.

10. Flugzeug (1) nach einem der vorherigen Ansprüche, wobei die Feuerbarriere-Elemente (11a, 11b, 11c, ..., 11i) ferner wenigstens einen Sensor zur Erfassung von Temperatur, Rauch, Wasserstoff (H2), Kohlenstoffmonoxid (CO), Kohlenstoffdioxid (CO2), Ethylen (C2H4) oder Methan (CH4) umfassen.

11. Flugzeug (1) nach Anspruch 10, wobei der wenigstens eine Sensor kommunikativ mit einem Flugzeug-Managementsystem gekoppelt ist.
